# EUROPÄISCHE PATENTSCHRIFT

(11) **EP 2 822 828 B1**
(45) Veröffentlichungstag und Bekanntmachung des Hinweises auf die Patenterteilung: **30.11.2016**
(21) Anmeldenummer: 13709768.9
(22) Anmeldetag: 08.03.2013
(51) Int. Cl.: B60T 13/66, B60T 17/22

(54) **BEOBACHTER FÜR EINEN BREMSAKTUATORDRUCK SOWIE BEOBACHTUNGSVERFAHREN FÜR EINEN BREMSAKTUATORDRUCK**
BRAKE ACTUATOR PRESSURE OBSERVER AND BRAKE ACTUATOR PRESSURE OBSERVING METHOD
OBSERVATEUR D'UN PRESSION D'UN ACTIONNEUR DE FREINAGE ET PROCÉDÉ DE OBSERVER D'UN PRESSION D'UN ACTIONNEUR DE FREINAGE

(30) Priorität: 09.03.2012 DE 102012004892
(43) Veröffentlichungstag der Anmeldung: 14.01.2015
(73) Patentinhaber: KNORR-BREMSE Systeme für Schienenfahrzeuge GmbH, 80809 München (DE)
(72) Erfinder: MAYER, Reinhold, 85757 Karlsfeld (DE)
(86) Internationale Anmeldenummer: PCT/EP2013/000689
(87) Internationale Veröffentlichungsnummer: WO 2013/131654

(56) Entgegenhaltungen:
- EP-A2- 1 291 259
- DE-A1- 19 514 382

## Beschreibung

Die vorliegende Erfindung betrifft einen Beobachter für eine Bremseinrichtung eines Schienenfahrzeugs, der zur Abschätzung eines an einem druckbetätigten Bremsaktuator anliegenden Aktuatordrucks ausgebildet ist. Die Erfindung betrifft außerdem ein entsprechendes Verfahren sowie eine Bremseinrichtung für ein Schienenfahrzeug mit einem entsprechenden Beobachter und ein entsprechendes Schienenfahrzeug.

In Schienenfahrzeugen kommen häufig druckbetätigte Bremseinrichtungen wie pneumatische oder hydraulische Bremsen zum Einsatz. Derartig Bremsen weisen in der Regel druckbetätigte Bremsaktuatoren wie Bremszylinder auf, die bei Anliegen eines Druckes eine Bremswirkung auf das Schienenfahrzeug erzeugen können. Für die erzeugte Bremswirkung ist dabei der anliegende Druck im Bremsaktuator von großer Bedeutung. Zu genauen Ansteuerung eines Bremssystems ist es daher vorteilhaft, diesen Druck möglichst genau zu kennen. Es ist allerdings teuer und aufwendig, jeden einzelnen Bremsaktuator oder Bremszylinder mit einem Drucksensor zu versehen.

DE 195 14 382 A1 offenbart eine Bremsanlage für Kraftfahrzeuge, die einen regelbaren pneumatischen Bremskraftverstärker aufweist, dessen Steuerventil unabhängig vom Fahrerwillen durch einen Elektromagneten betätigbar ist.

Eine Aufgabe der vorliegenden Erfindung besteht darin, auf einfache und preisgünstige Art die Bestimmung oder Abschätzung eines Drucks in einem Bremsaktuator wie einem Bremszylinder zu ermöglichen.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Im Rahmen dieser Beschreibung kann ein Schienenfahrzeug jede Art von schienengebundenem Fahrzeug sein, etwa ein Fahrzeug mit harten Rädern wie Stahlrädern oder ein Fahrzeug mit gasgefüllten Reifen, die auf einer Schiene fahren. Ein Schienenfahrzeug kann einen oder mehrere Wagen, insbesondere Zugwagen und/oder Triebwagen und/oder nicht angetriebene Wagen aufweisen. Eine Bremseinrichtung kann insbesondere eine Reibungsbremseinrichtung sein, welche es vermag, ein Schienenfahrzeug und/oder ein oder mehrere Räder des Schienenfahrzeugs durch einen Reibungskontakt abzubremsen. Es kann ein druckbetätigter Bremsaktuator als Teil der Bremseinrichtung vorgesehen sein. Ein derartiger druckbetätigter Bremsaktuator kann allgemein dazu ausgebildet sein, einen an ihm anliegenden und/oder wirksamen Druck in eine Betätigungskraft zur Betätigung einer Bremseinrichtung umzusetzen, insbesondere zur Betätigung einer Reibungsbremseinrichtung. Eine Reibungsbremseinrichtung kann allgemein beispielsweise eine Scheibenbremse, eine Klotzbremse oder eine kombinierte Klotz-Scheibenbremse bezeichnen. Ein Bremsaktuator kann insbesondere ein Bremszylinder sein, der es vermag, einen pneumatischen oder hydraulischen Druck in eine Betätigungskraft umzusetzen. Ein zum Betätigen eines Bremsaktuators wirksamer Druck und/oder ein am Bremsaktuator anliegender Druck kann als Aktuatordruck bezeichnet werden. Eine Steuereinrichtung kann allgemein eine elektronische Steuereinrichtung sein. Es ist vorstellbar, dass eine Steuereinrichtung aus einer oder mehreren Komponenten besteht, die miteinander in Datenkommunikation stehen können. Eine Steuereinrichtung kann insbesondere eine Bremssteuereinrichtung sein, welche es vermag, mindestens eine Bremseinrichtung eines Schienenfahrzeugs und/oder eines Wagens des Schienenfahrzeugs anzusteuern. Insbesondere kann eine Steuereinrichtung dazu ausgebildet sein, eine Bremseinrichtung nach Maßgabe einer Bremsanforderung anzusteuern. Allgemein können Daten bestimmte Werte oder Größen repräsentieren. Dabei können Daten, welche einen Wert oder eine Größe repräsentieren, direkt dem Wert oder der Größe entsprechen und/oder diese angeben, oder es kann vorgesehen, dass sich der Wert oder die Größe aus den Daten berechnen lässt. So können beispielsweise Druckdaten einen Druck derart repräsentieren, dass sie den Wert eines Drucks direkt angeben oder sich der Druck aus ihnen berechnen lässt. Ansteuerungsdaten können insbesondere eine Ansteuerung einer Einrichtung repräsentieren. Dabei können Ansteuerungsdaten beispielsweise Signale zur Ansteuerung einer Einrichtung repräsentieren, die der Einrichtung zugeführt werden. Derartige Signale können insbesondere elektrische Signale sein. Es ist auch vorstellbar, dass Ansteuerungsdaten einen gemessenen Ansteuerungszustand einer Einrichtung repräsentieren, beispielsweise eine Schaltstellung einer Ventileinrichtung. Daten können allgemein Daten von einer Sensoreinrichtung bezeichnen, die beispielsweise einen Schaltzustand einer Einrichtung angeben können, etwa einer Ventileinrichtung. Daten können auch von einer Steuereinrichtung berechnet oder erzeugt werden. Es ist vorstellbar, dass Daten Größen und Werte von mehreren Quellen repräsentieren, beispielsweise von mehreren unterschiedlichen Sensoren und/oder Steuereinrichtungen. So können beispielsweise Ansteuerungsdaten sowohl Signale zur Ansteuerung einer Einrichtung wie einer Steuerventileinrichtung als auch Sensordaten umfassen, welche den durch die Ansteuerung erreichten Zustand der Einrichtung angeben. Das Erfassen von Daten durch eine Einrichtung kann beispielsweise das Empfangen und/oder Aufnehmen und/oder Auslesen von Daten bezeichnen. Dabei ist vorstellbar, dass eine Einrichtung über eine geeignete Schnittstelle Daten einliest, um sie zu erfassen. Eine Steuerventileinrichtung kann allgemein dazu ausgebildet sein, eine Fluidzufuhr und/oder einen bereitgestellten Druck einzustellen oder zu steuern. Eine Steuerventileinrichtung kann dabei pneumatisch oder hydraulisch nach Maßgabe eines Steuerdrucks und/oder elektrisch ansteuerbar sein. Eine Steuerventileinrichtung kann allgemein ein oder mehrere Ventile aufweisen, beispielsweise Vorsteuerventile und/oder pneumatisch ansteuerbare Ventile und/oder elektrisch ansteuerbare Ventile wie Magnetventile. Eine Bremseinrichtung kann eine druckbetätigte Bremseinrichtung wie eine hydraulische oder pneumatische Bremseinrichtung sein. Es ist vorstellbar, dass eine Bremseinrichtung eine Hauptsteuerventileinrichtung aufweist. Die Hauptsteuerventileinrichtung kann durch eine Steuereinrichtung, wie beispielsweise durch eine Bremssteuereinrichtung derart ansteuerbar sein, dass sie es vermag, eine Bremsanforderung in einen Hauptbremsdruck umzusetzen, welcher einer oder mehreren Steuerventileinrichtungen zuführbar sein kann. Über eine Steuerventileinrichtung können dabei der Hauptbremsdruck und/oder ein Aktuatordruck modifizierbar sein. Beispielsweise kann vorgesehen sein, dass eine Steuerventileinrichtung dazu ausgebildet ist, einen Druck nach Maßgabe einer Steuereinrichtung einzustellen, beispielsweise einem Gleitschutzrechner. So kann etwa die Steuerventileinrichtung dazu ausgebildet sein, bei einer entsprechenden Ansteuerung einen Hauptbremsdruck direkt zu einem druckbetätigten Bremsaktuator weiterzugeben, so dass der Hauptbremsdruck als Aktuatordruck wirkt. Bei einer anderen Ansteuerung kann die Steuerventileinrichtung den Aktuatordruck zu verringern vermögen. Die Steuerventileinrichtung kann beispielsweise dazu ausgebildet sein, bei entsprechender Ansteuerung eine Fluidverbindung zwischen einem Bremsaktuator und einem Fluidauslass zu einem Reservoir oder zur Atmosphäre herzustellen, um einen Aktuatordruck zu verringern. Allgemein kann eine Steuerventileinrichtung mindestens einen Eingang, einen Ausgang und einen Fluidauslass aufweisen Der Eingang kann beispielsweise fluidleitend mit einer Druckversorgung wie einer Hauptsteuerventileinrichtung verbunden oder verbindbar sein. Der Ausgang kann fluidleitend mit einem Bremsaktuator verbunden oder verbindbar sein. Es ist vorstellbar, dass der Fluidauslass mit einem Fluidreservoir oder der Atmosphäre verbunden oder verbindbar ist. Die Steuerventileinrichtung kann dabei insbesondere mindestens zwischen einer ersten Schaltstellung und einer zweiten Schaltstellung umschaltbar sein. In der ersten Schaltstellung kann eine fluidleitende Verbindung zwischen dem Eingang und dem Ausgang der Steuerventileinrichtung bestehen, während der Fluidauslass abgesperrt ist. In der zweiten Schaltstellung kann eine fluidleitende Verbindung zwischen dem Fluidauslass und dem Ausgang bestehen, wobei der Eingang abgesperrt ist. Die zweite Schaltstellung kann als eine betätigte Stellung angesehen werden, die insbesondere als eine Gleitschutzmassnahme ansteuerbar sein kann. Es kann eine separate Steuereinrichtung zur Ansteuerung der Steuerventileinrichtung vorgesehen sein. Es ist allerdings auch vorstellbar, dass die Steuerventileinrichtung alternativ oder zusätzlich durch eine Steuereinrichtung ansteuerbar ist, welches es vermag, einen Aktuatordruck abzuschätzen. Das Abschätzen eines Druckes kann insbesondere verschiedene mathematische Berechnungen umfassen, um aus gegebenen Daten eine Abschätzung für einen Wert oder eine Größe bereitzustellen. Die Abschätzung kann unabhängig von einer Messung des abzuschätzenden Wertes oder der abzuschätzenden Größe erfolgen. Eine Abschätzung kann einen oder mehrere Abschätzwerte ergeben, welche einen zu erwartenden oder geschätzten Wert für eine Größe angeben. Allgemein kann eine Hauptsteuerventileinrichtung einen Druckregler aufweisen, der es vermag, gemäß einer Bremsanforderung einen Hauptbremsdruck oder einen Vorsteuerbremsdruck bereitzustellen. Ferner kann eine Hauptsteuerventileinrichtung einen Druckumsetzer und/oder einen Druckverstärker aufweisen, der es vermag, einen Vorsteuerbremsdruck auf ein größeres Fluidvolumen umzusetzen und/oder zu verstärken. Die Hauptsteuerventileinrichtung kann dabei insbesondere Vorsteuerventile und/oder pneumatisch ansteuerbare Ventile und/oder elektrisch ansteuerbare Ventile umfassen. Es kann zweckmäßig sein, wenn die Hauptsteuerventileinrichtung elektrisch und/oder elektrohydraulisch und/oder elektropneumatisch ansteuerbar ist. Es ist vorstellbar, dass die Hauptsteuerventileinrichtung über eine rein druckbetätigte Rückfallebene verfügt, um eine Bremsung bei ausgefallener Steuerelektronik zu ermöglichen. Die Begriffe "stromaufwärts", "stromabwärts", "vorgeschaltet" und "nachgeschaltet" mit Bezug auf fluidleitend verbundene Komponenten beziehen sich auf eine Fluidströmungsrichtung von einer Druckquelle zu einem Bremsaktuator.

Erfindungsgemäß ist ein Beobachter für eine Bremseinrichtung eines Schienenfahrzeugs vorgesehen, wobei die Bremseinrichtung mindestens einen druckbetätigten Bremsaktuator umfasst, dem eine Steuerventileinrichtung vorgeschaltet ist. Der Beobachter ist dazu ausgebildet, basierend auf Druckdaten und Ansteuerungsdaten eine Abschätzung des am Bremsaktuator anliegenden Aktuatordrucks durchzuführen. Dabei repräsentieren die Druckdaten mindestens einen stromaufwärts der Steuerventileinrichtung vorliegenden Druck und die Ansteuerungsdaten repräsentieren eine Ansteuerung der Steuerventileinrichtung. Somit kann eine Abschätzung des am Bremsaktuator anliegenden Aktuatordrucks erfolgen, wodurch ein eigener Sensor für den Bremsaktuator eingespart werden kann. Insbesondere können ohne großen Aufwand bereits vorhandene Signale oder Daten zur Abschätzung des Aktuatordrucks verwendet werden. Es kann allerdings auch vorgesehen sein, dass eine Abschätzung für einen Bremsaktuator erfolgt, für den ein Drucksensor zur Überwachung des in ihm anliegenden Aktuatordrucks vorgesehen ist. Dadurch kann beispielsweise eine Plausibilitätskontrolle der Messergebnisse des Drucksensors des Bremsaktuators und/oder der Abschätzung und/oder der Druck- oder Ansteuerungsdaten erfolgen. Der Beobachter kann zum Empfangen und/oder Erfassen und/oder Bestimmen der Druckdaten und/oder Ansteuerungsdaten ausgebildet sein. Ein Beobachter kann allgemein als Software, Hardware oder einer Kombination daraus ausgebildet sein. Insbesondere kann der Beobachter als Software implementiert sein, die auf einer Steuereinrichtung lauffähig ist. Entsprechend kann ein Beobachter auf einem durch eine Steuereinrichtung lesbaren Speichermedium gespeichert sein. Auch eine Steuereinrichtung, die dazu ausgebildet ist, die Funktionen des Beobachters durchzuführen, kann als Beobachter angesehen werden. Somit kann der Beobachter insbesondere eine Steuereinrichtung sein. Es ist vorstellbar, dass der Beobachter dazu ausgebildet ist, einen zeitlichen Verlauf eines Aktuatordrucks insbesondere während eines Bremsvorgangs und/oder während einer Gleitschutzmassnahme abzuschätzen. Es kann vorgesehen sein, dass der Beobachter dazu ausgebildet ist, basierend auf den Druckdaten einen Initialwert für die Abschätzung des Aktuatordrucks zu ermitteln und/oder zu berechnen. Ausgehend von einem solchen Initialwert lässt sich die zeitliche Änderung des Aktuatordrucks ermitteln und/oder Abschätzen, was wiederum die Abschätzung des Aktuatordrucks auch zu Zeitpunkten ermöglicht, in denen der durch die Druckdaten repräsentierte Druck nicht direkt auf den Aktuator wirkt. Die Abschätzung des am Bremsaktuator anliegenden Aktuatordrucks kann basierend auf einem Modell der Steuerventileinrichtung erfolgen. Ein derartiges Modell kann beispielsweise in einer Speichereinrichtung des Beobachters oder einer Steuereinrichtung gespeichert sein. Das Modell kann auf experimentell ermittelten Eigenschaften der Steuerventileinrichtung und/oder theoretischen Überlegungen und/oder Simulationen in der Steuerventileinrichtung basieren. Das Modell kann tabellarisch oder in einer anderen geeigneten Form abgespeichert sein. Es ist insbesondere vorstellbar, dass das Modell einen zeitlichen Verlauf von Fluidströmungen und/oder Drücken innerhalb und im Bereich der Steuerventileinrichtung in Abhängigkeit von bestimmten Ansteuerungen und/oder Drücken beschreibt. Der Bereich der Steuerventileinrichtung kann dabei neben der eigentlichen Steuerventileinrichtung insbesondere eine Fluidverbindung zum Bremsaktuator und/oder den Bremsaktuator umfassen. So kann das Modell insbesondere den zeitlichen Verlauf eines Aktuatordrucks oder eines Drucks am mit dem Aktuator verbundenen Ausgang beschreiben, wenn die Steuerventileinrichtung den Ausgang mit einem Fluidauslass verbindet und ihren Eingang vom Ausgang trennt. In einer derartigen Schaltstellung der Steuerventilanordnung kann insbesondere der Bremsaktuator von einer Druckversorgung getrennt sein, die etwa einen Hauptbremsdruck und/oder Eingangsdruck bereitstellen kann. Diese Schaltstellung kann beispielsweise dann auftreten, wenn eine Gleitschutzmassnahme durchgeführt wird. Der Aktuatordruck wird sich dann abhängig von den Strömungseigenschaften der Steuerventileinrichtung abbauen. Der Beobachter kann zweckmäßig dazu ausgebildet sein, den Aktuatordruck und/oder den zeitlichen Verlauf des Aktuatordrucks insbesondere in einer solchen Schaltstellung der Steuerventileinrichtung abzuschätzen. Wird die Steuerventileinrichtung dann in eine Stellung gebracht, in welcher der Eingang wieder mit dem Ausgang verbunden wird und der Fluidauslass abgesperrt ist, steht dann eine gute Abschätzung für den Aktuatordruck zu Verfügung. Ist der Eingang der Steuerventileinrichtung mit dem Ausgang verbunden und der Fluidauslass abgesperrt, kann allgemein davon ausgegangen werden, dass der Aktuatordruck dem am Eingang der Steuerventileinrichtung anliegenden Eingangsdruck folgt, etwa einem Hauptbremsdruck. Das Modell kann in dementsprechend bei einer entsprechenden Ansteuerung der Steuerventileinrichtung den Eingangsdruck mit dem Aktuatordruck gleichsetzen. Die Einstellung des Aktuatordrucks auf den Eingangsdruck erfolgt jedoch mit einer gewissen zeitlichen Verzögerung, die zu einer Unsicherheit bei der Bremssteuerung führen kann. Durch die Abschätzung des Aktuatordrucks kann insbesondere während dieser Verzögerung eine verbesserte Ansteuerung der Bremseinrichtung insbesondere bei Unterbrechung und/oder nach Beendigung einer Gleitschutzmassnahme bereitgestellt werden. Es ist vorstellbar, dass der Beobachter dazu ausgebildet ist, bei einem Schalten der Steuerventileinrichtung in einen unbetätigten Zustand, in welchem der Eingang mit dem Ausgang verbunden ist, einen Druckunterschied zwischen dem Druck am Eingang der Steuerventileinrichtung und dem geschätzten Aktuatordruck zum Schaltzeitpunkt zu berücksichtigen, um insbesondere während einer Phase, in welcher sich der Aktuatordruck auf den Eingangsdruck und/oder Hauptbremsdruck einstellt, eine Abschätzung des Aktuatordrucks durchzuführen. Somit kann ein geschätzter Aktuatordruck zum Zeitpunkt des Umschaltens in den unbetätigten Zustand als Initialwert für eine Abschätzung des Drucks nach dem Umschalten dienen. Das Modell kann entsprechend die Eigenschaften der Steuerventileinrichtung im unbetätigten Zustand insbesondere bezüglich eines Druckausgleichs zwischen Eingang und Ausgang beschreiben. Der Beobachter kann dazu ausgebildet sein, basierend auf Ansteuerungsdaten und dem Modell einen Zustand und/oder eine Schaltstellung der Steuerventileinrichtung zu berechnen und/oder zu bestimmen. Es kann vorgesehen sein, dass der Beobachter dazu ausgebildet ist, basierend auf den Ansteuerungsdaten und/oder den Druckdaten und dem Modell eine Druckverteilung innerhalb der Steuerventileinrichtung und/oder zwischen Anschlüssen in der Steuerventileinrichtung zu ermitteln, insbesondere zwischen einem Fluidauslass der Steuerventileinrichtung und einem Ausgang der Steuerventileinrichtung, der mit dem Bremsaktuator fluid leitend verbunden ist. Allgemein können die Ansteuerungsdaten von einer Steuereinrichtung bereitgestellt werden, welche zur Ansteuerung der Steuerventileinrichtung ausgebildet ist. Druckdaten können insbesondere von einer Sensoreinrichtung zur Erfassung von Druckwerten und/oder von einer Steuereinrichtung und/oder einem weiteren Beobachter zum Abschätzen eines Druckes bereitgestellt sein, welcher von den Druckdaten repräsentiert wird. Die Steuerventileinrichtung kann einer Hauptsteuerventileinrichtung nachgeordnet sein, welche einen Hauptbremsdruck zur Betätigung des Bremsaktuators bereitzustellen vermag. Die Bremseinrichtung kann selbstverständlich mehrere Bremsaktuatoren umfassen, die durch die Hauptsteuerventileinrichtung mit einem gemeinsamen Hauptbremsdruck versorgbar sein können. Die Steuerventileinrichtung kann insbesondere dazu ausgebildet sein, einen durch eine Hauptsteuerventileinrichtung bereitgestellten Hauptbremsdruck für einen Bremsaktuator individuell zu modifizieren, insbesondere zu verringern und/oder zu erhöhen. Es ist vorstellbar, dass der Beobachter dazu ausgebildet ist, die Abschätzung während einer Bremsung und/oder einer Gleitschutzmassnahme durchzuführen. Die Steuerventileinrichtung kann derart ausgebildet sein, dass sie in einem unbetätigten Zustand den Bremsaktuator mit einem Bereich stromaufwärts der Steuerventileinrichtung verbindet, der über eine Hauptsteuerventileinrichtung mit einem Bremsdruck versorgbar ist. In diesem Zustand, welcher der oben erwähnten ersten Schaltstellung entsprechen kann, kann der von der Hauptsteuerventileinrichtung bereitgestellte Hauptbremsbremsdruck dem am Bremsaktuator anliegenden Aktuatordruck entsprechen. Es kann vorgesehen sein, dass die Steuerventileinrichtung in einem betätigten Zustand, welcher der oben beschriebenen zweiten Schaltstellung entsprechen kann, den Bremsaktuator mit einem Fluidauslass verbindet, der ein Bremsfluid wie eine hydraulische Flüssigkeit oder ein Gas einem Reservoir und/oder einem Außenbereich der Bremseinrichtung wie der Atmosphäre zuführt. Das Verbinden eines Fluidauslasses mit der Atmosphäre ist insbesondere für pneumatische Bremseinrichtungen zweckmäßig. Eine Ansteuerung der Steuerventileinrichtung kann insbesondere zum Umschalten der Steuerventileinrichtung zwischen einer ersten und zweiten Schaltstellung vorgesehen sein und/oder zwischen einem betätigten und unbetätigten Zustand. Die Druckdaten können auch mehrere unterschiedliche Drücke repräsentieren.

Die Steuerventileinrichtung kann die Ventileinrichtung einer Gleitschutzeinrichtung sein. Eine derartige Gleitschutzeinrichtung kann dazu ausgebildet sein, als Gleitschutzmassnahme einen Aktuatordruck derart zu verringern, dass er geringer ist als ein durch eine Hauptsteuerventileinrichtung bereitgestellter Hauptbremsdruck. Dies kann insbesondere dann zweckmäßig sein, wenn bei einem durch den Bremsaktuator gebremsten Rad ein Gleiten oder Blockieren festgestellt wird. Insbesondere kann die Gleitschutzeinrichtung dazu ausgebildet sein, zur Durchführung einer Gleitschutzmassnahme den Druck im Bremsaktuator zu verringern, indem sie die Verbindung des Bremsaktuators mit einem unter Druck stehenden Bereich stromaufwärts der Steuerventileinrichtung unterbricht und eine Verbindung zwischen dem Bremsaktuator und der Atmosphäre oder einem Reservoir herstellt. Dazu kann die Steuerventileinrichtung entsprechend in die zweite Schaltstellung schaltbar sein. Die Gleitschutzeinrichtung kann eine Steuereinrichtung wie einen Regler oder einen Gleitschutzrechner aufweisen, die es vermag, einen Gleitzustand eines Rades zu erfassen und eine Gleitschutzmassnahme anzusteuern.

Die Bremseinrichtung kann eine pneumatische oder hydraulische Bremseinrichtung sein. Insbesondere kann der Bremsaktuator pneumatisch oder hydraulisch betätigbar sein.

Es kann vorgesehen sein, dass die Druckdaten einen Vorsteuerdruck repräsentieren. Der Vorsteuerdruck kann insbesondere durch eine Hauptsteuerventileinrichtung in einen Hauptbremsdruck umsetzbar sein. Ein solcher Vorsteuerdruck kann als Vorsteuerbremsdruck bezeichnet werden. Bei bekannten Eigenschaften der Bremseinrichtung kann aus einem Vorsteuerdruck ein Initialwert für eine Abschätzung des Aktuatordrucks ermittelt werden.

Alternativ oder zusätzlich ist vorstellbar, dass die Druckdaten einen an einem Eingang der Steuerventileinrichtung anliegenden Eingangsdruck repräsentieren. Ein solcher Eingangsdruck entspricht bei unbetätigter Steuerventileinrichtung dem Ausgangsdruck und somit dem Aktuatordruck recht genau und kann somit gut als Initialwert dienen. Ein derartiger Druck kann beispielsweise ein Hauptbremsdruck sein. Ein Hauptbremsdruck kann beispielsweise durch eine Hauptsteuerventileinrichtung nach Maßgabe einer Bremsanforderung bereitstellbar sein. Dabei kann die Hauptsteuerventileinrichtung dazu ausgebildet sein, einen Vorsteuerdruck oder Vorsteuerbremsdruck in einen Hauptbremsdruck umzusetzen. Ein Eingang der Steuerventileinrichtung kann fluidleitend mit der Hauptsteuerventileinrichtung verbunden oder verbindbar sein. Es kann ein Eingangsdrucksensor oder ein Hauptbremsdrucksensor zur Erfassung des Eingangsdrucks oder Hauptbremsdrucks vorgesehen sein. Alternativ oder zusätzlich kann der Eingangsdruck durch einen geeigneten Eingangsdruckbeobachter abgeschätzt werden. Ein solcher Eingangsdruckbeobachter kann beispielsweise als Hauptbremsdruckbeobachter ausgebildet sein. Ein Eingangsdruckbeobachter oder ein Hauptbremsdruckbeobachter kann beispielsweise dazu ausgebildet sein, den Eingangsbremsdruck oder den Hauptbremsdruck basierend auf Druckdaten, welche einen Vorsteuerdruck wie einen Vorsteuerbremsdruck repräsentieren, und/oder einen Bremssollwert repräsentierenden Bremsdaten und/oder eine Belastung des Schienenfahrzeugs repräsentierenden Lastdaten abzuschätzen. Es ist vorstellbar, das ein Eingangsdruckbeobachter in der gleichen Steuereinrichtung implementiert ist wie der Beobachter zur Abschätzung des Aktuatordrucks.

Die Ansteuerungsdaten können Signale zur Ansteuerung der Steuerventileinrichtung repräsentieren. Derartige Signale könne insbesondere elektrische Signale sein, die sich bei einer Ansteuerung der Steuerventileinrichtung leicht für eine Weiterverarbeitung durch den Beobachter abzweigen und/oder kopieren lassen.

Es kann vorgesehen sein, dass der Beobachter als Teil einer Steuereinrichtung ausgebildet ist, welche es vermag, die Bremseinrichtung basierend auf der Abschätzung des am Bremsaktuators anliegenden Bremsdrucks anzusteuern. Somit kann bei der Ansteuerung die Abschätzung verwendet werden, was eine verbesserte Steuerung der Bremseinrichtung während einer Bremsung ermöglicht. Dabei kann ein Beobachter, welcher zur Datenübertragung mit einer Steuereinrichtung verbunden oder verbindbar ist, als Teil der Steuereinrichtung angesehen werden.

Die vorliegende Erfindung betrifft außerdem eine Bremseinrichtung für ein Schienenfahrzeug mit einem hierin beschriebenen Beobachter. Die Bremseinrichtung kann mindestens einen druckbetätigten Bremsaktuator umfassen. Ferner kann die Bremseinrichtung eine oder mehrere vom Bremsaktuator betätigbare Bremsen wie beispielsweise Scheibenbremsen und/oder Klotzbremsen und/oder kombinierte Klotz-Scheibenbremsen umfassen. Die Bremseinrichtung kann insbesondere eine Reibungsbremseinrichtung zum Abbremsen eines oder mehrerer Räder und/oder eine oder mehrere Radachsen sein. Es ist vorstellbar, dass die Bremseinrichtung eine oder mehrere Steuereinrichtungen und/oder Sensoreinrichtungen und/oder eine Gleitschutzeinrichtung aufweist.

Außerdem betrifft die vorliegende Erfindung ein Schienenfahrzeug mit einer hierin beschriebenen Bremseinrichtung und/oder einem hierin beschriebenen Beobachter.

Darüber hinaus wird erfindungsgemäß ein Verfahren zu Abschätzen eines an einem druckbetätigten Bremsaktuator einer Bremseinrichtung eines Schienenfahrzeugs anliegenden Aktuatordrucks beschrieben. Das Verfahren umfasst die Schritte des Erfassen, durch einen Beobachter, von Druckdaten, welche mindestens einen stromaufwärts einer Steuerventileinrichtung der Bremseinrichtung vorliegenden Druck repräsentieren, des Erfassens, durch den Beobachter, von Ansteuerungsdaten, welche eine Ansteuerung der Ventileinrichtung repräsentieren, sowie des Abschätzens, durch den Beobachter, des am Bremsaktuator anliegenden Aktuatordrucks basierend auf den Druckdaten und den Ansteuerungsdaten. Dabei ist die Steuerventileinrichtung dem Bremsaktuator vorgeschaltet. Die Bremseinrichtung kann eine hierin beschriebene Bremseinrichtung sein. Es ist vorstellbar, dass der Beobachter ein hierin beschriebener Beobachter ist. Die Steuerventileinrichtung kann eine Ventileinrichtung einer Gleitschutzeinrichtung sein. Zweckmäßigerweise kann die Bremseinrichtung eine pneumatische oder hydraulische Bremseinrichtung sein. Es ist vorstellbar, dass die Druckdaten einen Vorsteuerdruck repräsentieren. Alternativ oder zusätzlich können die Druckdaten einen an einem Eingang der Steuerventileinrichtung anliegenden Druck repräsentieren. Die Ansteuerungsdaten können Signale zu Ansteuerung der Steuerventileinrichtung repräsentieren. Es kann zweckmäßig sein, wenn eine Steuereinrichtung die Bremseinrichtung basierend auf der Abschätzung des am Bremsaktuator anliegenden Aktuatordrucks ansteuert.

Die Erfindung wird nun mit Bezug auf die begleitenden Zeichnungen anhand bevorzugter Ausführungsformen beispielhaft erläutert

Es zeigen:
- Figur 1: schematisch ein Beispiel für eine Bremseinrichtung mit einem Beobachter, welcher einen Aktuatordruck abschätzt;
- Figur 2: schematisch ein weiteres Beispiel für eine Bremseinrichtung mit einem Beobachter;
- Figur 3: schematisch noch ein weiteres Beispiel einer Bremseinrichtung mit einem Beobachter; und
- Figur 4: schematisch ein Diagramm eines Verfahrens zum Abschätzen eines Aktuatordrucks.

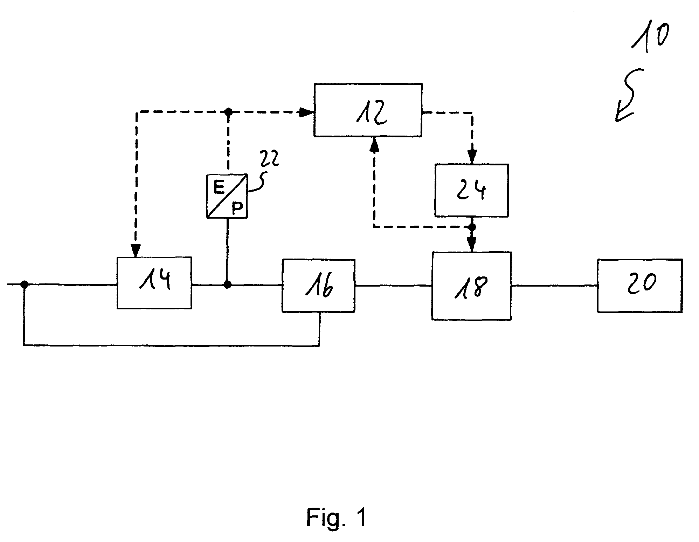

In den nachfolgenden Figuren bezeichnen gleiche Bezugszeichen gleiche oder funktional ähnliche Komponenten. In den Figuren 1 bis 3 sind fluidleitende Verbindungen mit durchgehenden Linien dargestellt, während Verbindungen zur elektromagnetischen Datenübertragung gestrichelt dargestellt sind. Derartige Verbindungen können beispielsweise drahtgebundene oder kabelgebundene Verbindungen und/oder Funkverbindungen sein.

Figur 1 zeigt schematisch ein Beispiel für eine Bremseinrichtung 10 eines Schienenfahrzeugs mit einem Beobachter 12, der zur Abschätzung eines Aktuatordrucks ausgebildet ist. Der Beobachter 12 kann in Form einer Steuereinrichtung implementiert sein. Der Beobachter 12 ist mit verschiedenen Komponenten der Bremseinrichtung 10 verbunden und kann als Teil der Bremseinrichtung 10 angesehen werden. Die Bremseinrichtung 10 umfasst neben dem Beobachter 12 einen Druckregler 14. Der Druckregler 14 ist an einem Druckreservoir angeschlossen und ist dazu ausgebildet, nach Maßgabe einer Steuereinrichtung einen Vorsteuerbremsdruck bereitzustellen. In diesem Beispiel wird der Druckregler 14 von der Steuereinrichtung angesteuert, in welcher auch der Beobachter 12 implementiert ist. Die Steuereinrichtung steuert den Druckregler nach Maßgabe einer Bremsanforderung an. Der Druckregler 14 stellt den Vorsteuerbremsdruck einen ihm nachgeschalteten Relaisventil 16 bereit. Das Relaisventil 16 wirkt in diesem Beispiel als Druckumsetzer und setzt den Vorsteuerbremsdruck auf ein größeres Fluidvolumen um. Allgemein kann auch ein Druckverstärker vorgesehen sein, welche den Vorsteuerbremsdruck zu erhöhen vermag. Der Relaisventil 16 stellt somit einen Hauptbremsdruck bereit, der zur Betätigung der Bremseinrichtung dienen kann. Der Druckregler 14 und das Relaisventil 16 können in diesem Beispiel als Teile einer Hauptsteuerventileinrichtung ausgebildet sein oder angesehen werden, welche es vermag, nach Maßgabe einer Bremsanforderung einen Hauptbremsdruck bereitzustellen. Der Hauptbremsdruck wird von dem Relaisventil 16 an eine Steuerventileinrichtung 18 geführt. Stromabwärts der Steuerventileinrichtung 18 ist in diesem Beispiel ein als Bremsaktuator wirkender Bremszylinder 20 vorgesehen. Der Bremszylinder 20 ist mit einem Ausgang der Steuerventileinrichtung 18 verbunden, während der Eingang der Steuerventileinrichtung 18 fluidleitend mit einem den Hauptbremsdruck bereitstellenden Ausgang des Relaisventils 16 verbunden ist. Die Steuerventileinrichtung 18 kann ferner einen Fluidauslass aufweisen. In diesem Beispiel ist vorgesehen, dass die Bremseinrichtung 10 eine pneumatische Bremseinrichtung ist, welche über den Druckregler 14, das Relaisventil 16 und die Steuerventileinrichtung 18 dem Bremszylinder 20 einen pneumatischen Druck bereitzustellen vermag. Liegt an dem Bremszylinder 20 ein Druck an, wird die zugeordnete Bremse (nicht gezeigt) nach Maßgabe des anliegenden Druckes betätigt. Der am Bremsaktuator oder Bremszylinder 20 wirkende Druck kann als Aktuatordruck bezeichnet werden. In der in Figur 1 gezeigten Variante ist die Steuerventileinrichtung 18 als Regelventil oder Steuerventil einer Gleitschutzeinrichtung ausgebildet. Zwischen den Druckregler 14 und das Relaisventil 16 ist ein Vorsteuerbremsdrucksensor 22 geschaltet, der es vermag, den Vorsteuerbremsdruck zu erfassen und diesen Druck repräsentierende Druckdaten in Form elektrischer Signale an den Beobachter 12 zu übermitteln. Darüber hinaus ist ein Gleitschutzrechner 24 vorgesehen, welcher es vermag, die Steuerventileinrichtung 18 anzusteuern. Der Gleitschutzrechner 24 kann dabei als elektronische Steuereinrichtung ausgebildet sein, welche mit geeigneten Sensoren verbunden ist, um eine Gleitschutzfunktion bereitzustellen. Dazu kann der Gleitschutzrechner 24 beispielsweise mit Raddrehzahlsensoren verbunden sein, um einen Gleitzustand oder Blockierzustand eines dem Bremszylinder 20 zugeordneten Rades zu bestimmen. Der Gleitschutzrechner 24 vermag es, die Steuerventileinrichtung 18 anzusteuern, um den Aktuatordruck einzustellen. Ferner ist eine datenübertragende Verbindung vorgesehen, über welche zur Ansteuerung der Steuerventileinrichtung 18 durch den Gleitschutzrechner 24 vorgesehene Signale auch dem Beobachter 12 als Ansteuerungsdaten zugeführt werden. Das Relaisventil 16 kann wie in Figur 1 gezeigt mit der gleichen Druckquelle verbunden sein wie der Druckregler 14, oder mit einer separaten Druckquelle. Bei einer Bremsung setzt der Druckregler 14 eine Bremsanforderung nach Maßgabe der Steuereinrichtung in einen Vorsteuerbremsdruck um. Der Vorsteuerbremsdruck wird über den Vorsteuerbremsdrucksensor 22 erfasst und in Form von Druckdaten, welche den Vorsteuerbremsdruck repräsentieren, an den Beobachter 12 übermittelt. Das Relaisventil 16 setzt den Vorsteuerbremsdruck in einen Hauptsteuerbremsdruck um. Es ist davon auszugehen, dass die Umsetzung des Vorsteuerbremsdrucks in einen Hauptsteuerbremsdruck in einem definierten Druckverhältnis erfolgt, so dass von Vorsteuerbremsdruck auf den Hauptbremsdruck geschlossen werden kann. Beispielsweise kann ein Umsetzverhältnis von 1 zu 1 vorgesehen sein, wenn keine Druckverstärkung erfolgt. Der vom Relaisventil 16 bereitgestellte Hauptbremsdruck wird an den Eingang der Steuerventileinrichtung 18 angelegt. Ist die Steuerventileinrichtung 18 unbetätigt, nimmt sie einen Zustand ein, in welchem ihr Eingang und ihr Ausgang miteinander verbunden sind. Somit wird der Hauptbremsdruck durch die Steuerventileinrichtung 18 an den Bremszylinder 20 weitergeleitet und wirkt dort als Aktuatordruck zur Betätigung des Bremszylinders 20, wodurch die mit dem Bremszylinder 20 verbundene Reibungsbremse betätigt wird. Während der Bremsung überwacht der Gleitschutzrechner 24, ob ein unerwünschter Gleit- oder Blockierzustand des gebremsten Rades auftritt. Ist dies der Fall, steuert der Gleitschutzrechner 24 die Steuerventileinrichtung 18 dazu an, den Aktuatordruck zu verringern. Dabei werden in diesem Beispiel Signale vom Gleitschutzrechner 24 an die Steuerventileinrichtung 18 übertragen, welche die Steuerventileinrichtung 18 dazu betätigen, ihren mit dem Relaisventil 16 verbundenen Eingang abzusperren und eine Verbindung zwischen ihrem Auslass und dem mit dem Bremszylinder 20 verbundenen Ausgang herzustellen. Somit kann der Aktuatordruck über den Auslass der Steuerventileinrichtung 18 verringert werden. Im gezeigten Beispiel ist der Auslass mit der Atmosphäre verbunden. Insbesondere für eine hydraulische Bremseinrichtung kann jedoch auch vorgesehen sein, dass der Auslass mit einem Fluidreservoir, beispielsweise zur Aufnahme einer Hydraulikflüssigkeit verbunden ist. Während einer Ansteuerung der Steuerventileinrichtung 18, um eine derartige Gleitschutzmassnahme durchzuführen, wird der Bremszylinder 20 vom Eingang der Steuerventileinrichtung 18 getrennt. Daher kann der Aktuatordruck dem Hauptbremsdruck nicht mehr folgen, sondern hängt im Wesentlichen von seinem Initialwert bei Beginn der Gleitschutzmassnahme sowie den Strömungseigenschaften und der Ansteuerung der Steuerventileinrichtung 18 ab. Die Signale zur Ansteuerung der Steuerventileinrichtung 18 werden auch dem Beobachter 12 als Ansteuerungsdaten zugeführt. Der Beobachter 12 vermag es, basierend auf den Druckdaten und den Ansteuerungsdaten den Aktuatordruck zu berechnen und/oder abzuschätzen. Dazu kann der Beobachter 12 dazu ausgebildet sein, ein Modell der Steuerventileinrichtung 18 zu berücksichtigen, welches insbesondere die Strömungsverhältnisse eines Fluids während einer Gleitschutzmassnahme in Abhängigkeit von Initialwert und den Ansteuerungsdaten beschreiben kann. Das Modell kann auf experimentellen und/oder theoretischen Erkenntnissen und/oder auf Simulationsdaten beruhen. Der Beobachter 12 kann dazu ausgebildet sein, zur Abschätzung des Aktuatordrucks basierend auf den Ansteuerungsdaten und den Druckdaten und gegebenenfalls dem Modell einen Abschätzwert für den Aktuatordruck zu berechnen. Es kann insbesondere vorgesehen sein, dass ein gemessener Wert für den Vorsteuerbremsdruck als Initialwert für die Abschätzung durch den Beobachter 12 bereitgestellt und/oder verwendet wird. Somit kann bei Kenntnis der Eigenschaften der Steuerventileinrichtung 18 eine gute Abschätzung des Aktuatordrucks zur Bremssteuerung bereitgestellt werden.

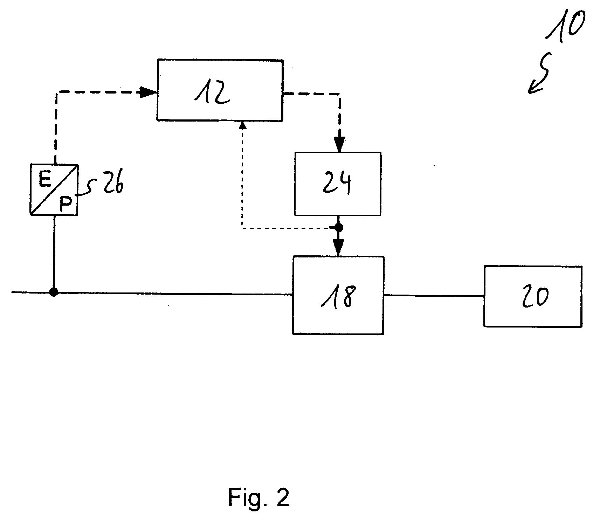

Figur 2 zeigt schematisch ein weiteres Beispiel für eine Bremseinrichtung 10. Der Aufbau dieser Bremseinrichtung entspricht im Wesentlichen dem Aufbau der in Figur 1 gezeigten Bremseinrichtung, so dass einige Komponenten nicht gezeigt sind. Alternativ oder zusätzlich zum Vorsteuerbremsdrucksensor 22 der in Figur 1 gezeigten Vatiante kann die Bremseinrichtung 10 einen Hauptbremsdrucksensor 26 umfassen. Der Hauptbremsdrucksensor 26 ist dazu ausgebildet, den Hauptbremsdruck stromabwärts des in dieser Figur nicht gezeigten Relaisventils und stromaufwärts der Steuerventileinrichtung 18 zu erfassen und Druckdaten an den Beobachter 12 zu übermitteln, welche den erfassten Druckwert repräsentieren. Der Beobachter 12 der Figur 2 kann somit basierend auf Druckdaten vom Hauptbremsdrucksensor 26, den Ansteuerungsdaten und gegebenenfalls Druckdaten von einem Vorsteuerbremsdrucksensor 22 eine Abschätzung des Aktuatordrucks im Bremszylinder 20 durchführen. Dabei kann insbesondere der durch den Hauptbremsdrucksensor 26 gemessene Hauptbremsdruck als Initialwert für die Abschätzung verwendet werden.

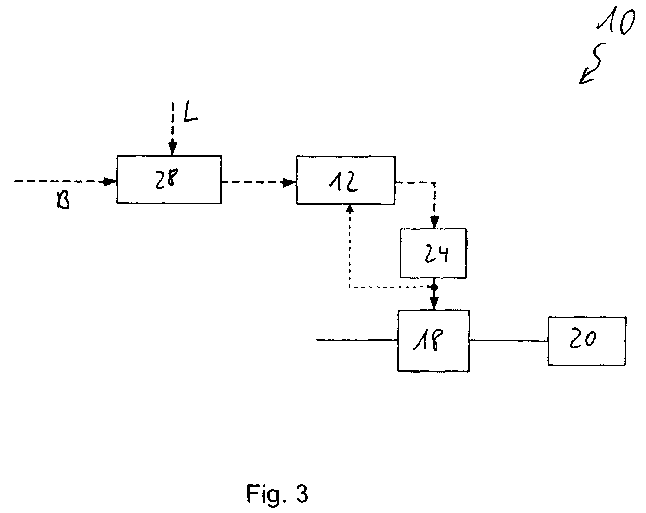

Figur 3 zeigt schematisch eine weitere Variante einer Bremseinrichtung 10 Der Aufbau dieser Bremseinrichtung entspricht im Wesentlichen dem Aufbau der in Figuren 1 und 2 gezeigten Bremseinrichtungen, so dass einige Komponenten nicht gezeigt sind. Gemäß der in Figur 3 gezeigten Variante ist vorgesehen, einen an der Steuerventileinrichtung 18 anliegenden Eingangsdruck abzuschätzen, in dem gezeigten Beispiel also den Hauptbremsdruck. Dazu werden einem Hauptbremsdruckbeobachter 28 Bremsdaten B zugeführt, welche einen Bremssollwert repräsentieren, sowie Lastdaten L, welche einen Belastungszustand repräsentieren. Es kann vorgesehen sein, dass dem Hauptbremsdruckbeobachter 28 auch Druckdaten von einem Vorsteuerbremsdrucksensor 22 zugeführt werden. Der Hauptbremsdruckbeobachter 28 kann separat von dem Beobachter 12 ausgebildet sein oder in einer gemeinsamen Steuereinrichtung implementiert sein. Es ist vorstellbar, dass der Hauptbremsdruckbeobachter 28 es vermag, auf ein Modell der Bremseinrichtung und/oder des Fahrzeugs zuzugreifen, welches insbesondere eine Bremscharakteristik des Fahrzeugs beschreibt. Basierend auf den Bremsdaten, den Belastungsdaten und gegebenenfalls den Druckdaten vermag es der Hauptbremsdruckbeobachter 28, den Hauptbremsdruck und den Eingangsdruck an der Steuerventileinrichtung 28 zu berechnen und somit abschätzen. Das Ergebnis der Abschätzung kann dem Beobachter 12 in der Form von entsprechenden Druckdaten bereitgestellt werden und als Initialwert zur Abschätzung des Aktuatordrucks insbesondere während einer Phase dienen, in welcher die Steuerventileinrichtung 18 den Bremszylinder 20 vom Hauptbremsdruck trennt. Basierend auf der Eingangsdruckabschätzung vermag es der Beobachter 12, den Aktuatordruck abzuschätzen. Es ist allgemein vorstellbar, eine derartige Eingangsdruckabschätzung allein oder in Verbindung mit einem Vorsteuerbremsdrucksensor und/oder einem Hauptbremsdrucksensor durchzuführen. Es können somit mehrere Druckdatenquellen verwendet werden, wie etwa der Vorsteuerdrucksensor 22, der Hauptbremsdrucksensor 26 und der Eingangsdruckbeobachter 28, um eine verbesserte Plausibilitätskontrolle und eine höhere Genauigkeit der Abschätzung des Aktuatordrucks zu ermöglichen.

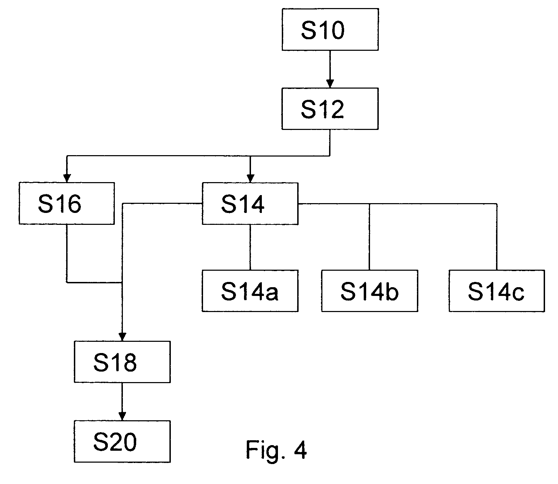

Figur 4 zeigt schematisch ein Flussdiagramm eines Verfahrens zum Abschätzen eines Aktuatordrucks. Das Verfahren kann beispielsweise durch einen hierin beschriebenen Beobachter und/oder eine hierin beschriebene Bremseinrichtung durchgeführt werden. In einem optionalen Schritt S10 kann eine Bremseinrichtung zu einer Bremsung angesteuert werden. Dazu können beispielsweise Zugführer und/oder eine Steuereinrichtung eine Hauptsteuerventileinrichtung 14, 16 einer druckbetätigten Bremseinrichtung ansteuern, um einen Hauptbremsdruck bereitzustellen. In einem optionalen zweiten Schritt S12, der zusätzlich zum Schritt S10 ausgeführt werden kann, kann das Ansteuern einer stromabwärts einer Hauptsteuerventileinrichtung angeordneten Steuerventileinrichtung erfolgen. Dabei kann beispielsweise ein in einem Bremsaktuator wirksamer Aktuatordruck 18 verringert werden. In einem Schritt S14 kann ein Beobachter, beispielsweise einer der in Figuren 1 bis 3 beschriebenen Beobachter, Druckdaten empfangen. Der Schritt S14 kann parallel zu mindestens einem der Schritte S10 oder S12, nach einem dieser Schritte oder unabhängig von diesen Schritten durchgeführt werden. Es kann vorgesehen sein, dass in Schritt S14 Druckdaten von mehreren Datenquellen empfangen werden. So kann beispielsweise in einem Unterschritt S14a des Schritts S14 der Beobachter Druckdaten von einem Vorsteuerbremsdrucksensor empfangen. In einem Unterschritt S14b kann der Beobachter Druckdaten von einer Hauptbremsdrucksensoreinrichtung empfangen, welche einen Hauptbremsdruck repräsentieren können. In einem Unterschritt S14c kann der Beobachter 12 Druckdaten von einem Eingangsdruckbeobachter erfassen und/oder empfangen. Parallel oder seriell zum Schritt S14 kann der Beobachter in einem Schritt S16 Ansteuerungssignale der Steuerventileinrichtung erfassen und/oder empfangen, die als Ansteuerungsdaten angesehen werden können. Basierend auf den Druckdaten und den Ansteuerungsdaten sowie gegebenenfalls einem Modell der Steuerventileinrichtung, welches insbesondere die Strömungseigenschaften der Steuerventileinrichtung in Abhängigkeit von ihrer Ansteuerung und den Drücken an Ausgang, Eingang und Auslass beschreiben kann, kann der Beobachter in einem nachfolgenden Schritt S18 den Aktuatordruck des Bremsaktuators berechnen und abschätzen. Der Schritt S18 kann dabei auch parallel zu den Schritten S14 und/oder S16 des Erfassens von Druckdaten und Ansteuerungsdaten durchgeführt werden, sobald entsprechende Daten zur Abschätzung vorliegen. Dies ermöglicht eine ständige Aktualisierung der Abschätzung. Durch die Abschätzung kann zuverlässig ein Wert für den Aktuatordruck bereitgestellt werden, der insbesondere dann, wenn die Ansteuerung der Steuerventileinrichtung aufgehoben wird, beispielsweise weil eine Gleitschutzmaßnahme beendet wird, eine verbesserte Ansteuerung des weiteren Bremsvorgangs ermöglichen kann. Dazu kann insbesondere ein Schritt S20 vorgesehen sein, in welchem eine Ansteuerung der Bremse basierend auf der Abschätzung durchgeführt wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Bremseinrichtung
- 12: Beobachter
- 14: Druckregler
- 16: Relaisventil
- 18: Steuerventileinrichtung
- 20: Bremszylinder
- 22: Vorsteuerbremsdrucksensor
- 24: Gleitschutzrechner
- 26: Hauptbremsdrucksensor
- 28: Hauptbremsdruckbeobachter

## Patentansprüche

1. Beobachter (12) für eine Bremseinrichtung (10) eines Schienenfahrzeugs, wobei die Bremseinrichtung (10) mindestens einen druckbetätigten Bremsaktuator (20) umfasst, dem eine Steuerventileinrichtung (18) vorgeschaltet ist, wobei der Beobachter (12) dazu ausgebildet ist, basierend auf Druckdaten und Ansteuerungsdaten eine Abschätzung des am Bremsaktuator (20) anliegenden Aktuatordrucks durchzuführen, wobei die Druckdaten mindestens einen stromaufwärts der Steuerventileinrichtung (18) vorliegenden Druck repräsentieren und die Ansteuerungsdaten eine Ansteuerung der Steuerventileinrichtung (18) repräsentieren.

2. Beobachter nach Anspruch 1, wobei die Steuerventileinrichtung (18) eine Ventileinrichtung einer Gleitschutzeinrichtung ist.

3. Beobachter nach Anspruch 1 oder 2, wobei die Bremseinrichtung (10) eine pneumatische oder hydraulische Bremseinrichtung ist.

4. Beobachter nach einem der vorhergehenden Ansprüche, wobei die Druckdaten einen Vorsteuerdruck repräsentieren.

5. Beobachter nach einem der vorhergehenden Ansprüche, wobei die Druckdaten einen an einem Eingang der Steuerventileinrichtung (18) anliegenden Eingangsdruck repräsentieren.

6. Beobachter nach einem der vorhergehenden Ansprüche, wobei die Ansteuerungsdaten Signale zur Ansteuerung der Steuerventileinrichtung (18) repräsentieren.

7. Beobachter nach einem der vorhergehenden Ansprüche, wobei der Beobachter (12) als Teil einer Steuereinrichtung ausgebildet ist, welche es vermag, die Bremseinrichtung (10) basierend auf der Abschätzung des am Bremsaktuator (20) anliegenden Aktuatordrucks anzusteuern.

8. Bremseinrichtung (10) für ein Schienenfahrzeug mit einem Beobachter (12) nach einem der Ansprüche 1 bis 7.

9. Schienenfahrzeug mit einer Bremseinrichtung (10) nach Anspruch 8 und/oder einem Beobachter (12) nach einem der Ansprüche 1 bis 7.

10. Verfahren zum Abschätzen eines an einem druckbetätigten Bremsaktuator (20) einer Bremseinrichtung (10) eines Schienenfahrzeugs anliegenden Aktuatordrucks, mit den Schritten:
- Erfassen, durch einen Beobachter (12), von Druckdaten, welche mindestens einen stromaufwärts einer Steuerventileinrichtung (18) der Bremseinrichtung (10) vorliegenden Druck repräsentieren, wobei die Steuerventileinrichtung (18) dem Bremsaktuator (20) vorgeschaltet ist;
- Erfassen, durch den Beobachter (12), von Ansteuerungsdaten, welche eine Ansteuerung der Steuerventileinrichtung (18) repräsentieren;
- Abschätzen, durch den Beobachter (12), des am Bremsaktuator (20). anliegenden Aktuatordrucks basierend auf den Druckdaten und den Ansteuerungsdaten.

## Claims

1. Monitor (12) for a brake device (10) of a railway vehicle, wherein the brake device (10) comprises at least one pressure-actuated brake actuator (20), from which a control valve device (18) is connected upstream, wherein the monitor (12) is implemented for the purpose of carrying out an estimation of the actuator pressure applied to the brake actuator (20) based on pressure data and activation data, wherein the pressure data represent at least one pressure present upstream of the control valve device (18) and the activation data represent an activation of the control valve device (18).

2. Monitor according to Claim 1, wherein the control valve device (18) is a valve device of a wheel slide protection device.

3. Monitor according to Claim 1 or 2, wherein the brake device (10) is a pneumatic or hydraulic brake device.

4. Monitor according to any one of the preceding claims, wherein the pressure data represent a pilot control pressure.

5. Monitor according to any one of the preceding claims, wherein the pressure data represent an input pressure applied to an input of the control valve device (18).

6. Monitor according to any one of the preceding claims, wherein the activation data represent signals for activating the control valve device (18).

7. Monitor according to any one of the preceding claims, wherein the monitor (12) is implemented as part of a control device, which is capable of activating the brake device (10) based on the estimation of the actuator pressure applied to the brake actuator (20).

8. Brake device (10) for a railway vehicle having a monitor (12) according to any one of Claims 1 to 7.

9. Railway vehicle having a brake device (10) according to Claim 8 and/or a monitor (12) according to any one of Claims 1 to 7.

10. Method for estimating an actuator pressure applied to a pressure-actuated brake actuator (20) of a brake device (10) of a railway vehicle, having the following steps:
- registration, by a monitor (12), of pressure data, which represent at least one pressure present upstream of a control valve device (18) of the brake device (10), wherein the control valve device (18) is connected upstream of the brake actuator (20);
- registration, by the monitor (12), of activation data, which represent an activation of the control valve device (18);
- estimation, by the monitor (12), of the actuator pressure applied to the brake actuator (20) based on the pressure data and the activation data.

## Revendications

1. Observateur (12) pour un dispositif (10) de frein d'un véhicule ferroviaire, le dispositif (10) de frein comprenant au moins un actionneur (20) de frein, qui est actionné par la pression et en amont duquel est monté un dispositif (18) de soupape de commande, l'observateur (12) étant constitué pour, sur la base de données de pression et de données de commande, effectuer une évaluation de la pression s'appliquant à l'actionneur (20) de frein, les données de pression représentant au moins une pression régnant en amont du dispositif (18) de soupape de commande et les données de commande représentant une commande du dispositif (18) de soupape de commande.

2. Observateur suivant la revendication 1, dans lequel le dispositif (18) de soupape de commande est un dispositif de soupape d'un dispositif anti-enrayeur.

3. Observateur suivant la revendication 1 ou 2, dans lequel le dispositif (10) de frein est un dispositif de frein pneumatique ou hydraulique.

4. Observateur suivant l'une des revendications précédentes, dans lequel les données de pression représentent une pression pilote.

5. Observateur suivant l'une des revendications précédentes, dans lequel les données de pression représentent une pression d'entrée s'appliquant à une entrée du dispositif (18) de soupape de commande.

6. Observateur suivant l'une des revendications précédentes, dans lequel les données de commande représentent des signaux de commande du dispositif (18) de soupape de commande.

7. Observateur suivant l'une des revendications précédentes, dans lequel l'observateur (12) est constitué en partie d'un dispositif de commande, qui permet de commander le dispositif (10) de frein sur la base de l'évaluation de la pression s'appliquant à l'actionneur (20) de frein.

8. Dispositif (10) de frein d'un véhicule ferroviaire ayant un observateur (12) suivant l'une des revendications 1 à 7.

9. Véhicule ferroviaire ayant un dispositif (10) de frein suivant la revendication 8 et/ou un observateur (12) suivant l'une des revendications 1 à 7.

10. Procédé d'évaluation d'une pression s'appliquant à un actionneur (20) de frein actionné par la pression d'un dispositif (10) de frein d'un véhicule ferroviaire, comprenant les stades :
- détection par un observateur (12) de données de pression, qui représentent au moins une pression régnant en amont d'un dispositif (18) de soupape de commande du dispositif (10) de frein, le dispositif (18) de soupape de commande étant monté en amont de l'actionneur (20) de frein ;
- détection, par l'observateur (12), de données de commande, qui représentent une commande du dispositif (18) de soupape de commande ;
- évaluation, par l'observateur (12), de la pression s'appliquant à l'actionneur (20) de frein sur la base des données de pression et de données de commande.
